# EUROPÄISCHE PATENTANMELDUNG

(11) **EP 1 267 130 A1**
(43) Veröffentlichungstag der Anmeldung: **18.12.2002**
(21) Anmeldenummer: 01114419.3
(22) Anmeldetag: 15.06.2001
(51) Int. Cl.: F24D 11/00

(54) **Speicherbehälter**

(71) Anmelder: Sonnenkraft Vertriebs GmbH, 9065 Klagenfurt/Ebenthal (AT)
(72) Erfinder: Schütz, Hans, 93191 Rettenbach (DE)
(74) Vertreter: Schön, Theodor, Patent- und Zivilingenieur

(57) **Zusammenfassung**

Die vorliegende Erfindung betrifft einen Speicherbehälter zur Speicherung der insbesondere über Solarkollektoren gewonnenen Wärmeenergie für Heizungszwecke und Warmwasser, bestehend aus einem allseits geschlossenen zylindrischen Behälter mit Zu- und Ablaufanschlüssen für eine zentrale Hausheizung, einem innerhalb dieses Speicherbehälters angeordneten Boiler für das Warmwasser mit entsprechenden Zu- und Ablaufleitungen und mehreren Temperaturfühlern und einem wendelförmigen Registerrohr, welches von einem Wärmeträgermedium durchflossen wird und dabei die gewonnene Wärmeenergie an das Wasser im Speicherbehälter abgibt, welches die Außenwand des Registerrohres umspült. Zwischen dem Boiler 3 und dem Mantel 2 des Speicherbehälters 1 ist eine zylinderförmige Turbohülse 7 angeordnet. Das Registerrohr 6 liegt zumindest größtenteils zwischen der Innenwand der Turbohülse 7 und der Außenwand des Boilers 3.

## Beschreibung

Die vorliegende Erfindung betrifft einen Speicherbehälter mit integriertem Boiler für Warmwasser, wobei die Wärmeenergie vorzugsweise mittels Sonnenkollektoren gewonnen wird.

Herkömmliche Speicherbehälter bestehen aus einem zylindrischen, allseits geschlossenen Stahlbehälter. Um in einer Platz sparenden Einheit sowohl das Warmwasser einer Zentralheizungsanlage als auch das warme Trink- bzw. Brauchwasser zu speichern und gleichzeitig die Abstrahlungsverluste zu minimieren, wurden Speicherbehälter mit innenliegenden Boilerbehältern entwickelt, bei denen die Außenfläche des Boilers zumindest größtenteils vom Heizungswasser umspült wird. Speicherbehälter und Boiler bilden hier zwei konzentrische Zylinder, wobei der Boilerbehälter zum oberen Ende des Speicherbehälters hin verschoben ist, da hier das Heizungswasser den größten Wärmeinhalt aufweist..

Derartige Speicherbehälter werden gerne mit Solarkollektoren kombiniert, wobei die das Wärmeträgermedium aus den Kollektorflächen zum Speicherbehälter führenden Rohre bevorzugt in einem wendelförmig angeordneten Registerrohr münden, welches innerhalb des Speicherbehälters angeordnet ist und den Boilerbehälter zumindest teilweise, in seinem unteren Bereich umgreift. Das Registerrohr wird knapp an der Innenwand des Speicherbehälters geführt.

Das von den Solarkollektoren kommende Wärmeträgermedium fließt durch das Registerrohr und gibt dabei seinen Wärmeinhalt an das Heizungswasser im Speicherbehälter ab. Das erhitzte Heizungswassers gibt seinen Wärmeinhalt teilweise an das Boilerwasser über die Wand des Boilers ab und erwärmt somit das Boilerwasser. Dieser Vorgang wird bei ununterbrochener Wärmezufuhr aus den Kollektoren solange fortgesetzt, bis sämtliche Medien gleiches Temperaturniveau erreicht haben.

Dieser bekannte Speicherbehälter zeichnet sich durch ein gutes Preis-Leistungsverhältnis aus, hat einen geringeren Platzbedarf als Anlagen mit getrennten Speicherbehältern für Boilerwasser und Heizungswasser und zeichnet sich gegen diese Anlagen auch durch geringere Abstrahlungsverluste aus.

Trotz dieser guten Eigenschaften weist dieser bekannte Speicherbehälter jedoch eine Reihe von Nachteilen auf, welche insbesondere in der Kombination mit Solarkollektoren unangenehm sind.

So ist durch die zylindrische Anordnung des Registerrohres im Speicherbehälter die Aufheizphase sehr träge, da stets das gesamte Speichervolumen vom niedrigsten Energieniveau, üblicherweise etwa 20 °C auf das gewünschte Heizungsniveau von 60 °C bis 70 °C angehoben werden muß. Eine schichtweise Beheizung von oben nach unten ist nicht möglich.

Während der Aufheizphase steigt heißes Speicherwasser am Registerrohr nach oben. Dabei kommt es zwangsläufig zu einer unerwünschten Vermischung durch Wirbelbildung mit dem noch kühleren Umgebungswasser im Speicherbehälter. Das Ergebnis ist eine Mischtemperatur, welche im gesamten Speicherbehälter in etwa gleich ist.

Die Folge ist ein sehr langsamer, zäher Aufheizprozeß innerhalb des Speicherbehälters. Bei einer genügend starken Sonneneinstrahlung wird dieser Nachteil nicht von besonderer Bedeutung sein, da es die Solaranlage innerhalb vertretbarer Zeit leicht schafft, den gesamten Speicherinhalt gemeinsam mit dem Boilerwasser auf die gewünschte Temperatur aufzuheizen.

Dieser Mangel macht sich jedoch bei geringerer Sonnenscheindauer unangenehm bemerkbar. Hierbei wird zwar auch Wärmeenergie in den Speicherbehälter eingebracht, allerdings reicht diese oft nicht für Heizzwecke und/oder für den Gebrauch des Boilerwassers aus, weil durch den beschriebenen Mischeffekt nicht das gewünschte Temperaturniveau erreicht wird. Die Folge ist, dass über einen konventionellen Heizkessel zusätzliche Wärmeenergie in den Speicherbehälter eingebracht werden muß.

Ein ähnlicher Störeffekt, verursacht durch eine Durchmischung von wärmerem Wasser mit kälterem Wasser wird durch die Entnahme von Heißwasser für die Zentralheizungsanlage verursacht. Üblicherweise befindet sich dafür im oberen Bereich des Speicherbehälters ein Anschluß für das heiße abfließende Wasser und im unteren Bereich des Speicherbehälters ein Anschluß für zufließendes kühleres Wasser. Die Fließgeschwindigkeiten bewirken jedoch innerhalb des Speicherbehälters eine starke Wirbelbildung und verhindern damit eine nachhaltige Bildung von Wasserschichten mit unterschiedlichem Energieinhalt.

Besonders nachteilig ist dabei, dass auch das Wasser im oberen Drittel des Speicherbehälters abgekühlt wird. In diesem oberen Drittel sollte jedoch das Wasser immer zumindest 60 °C heiß bleiben, damit eine durchgehende Versorgung mit heißem Boilerwasser gesichert ist.
Um diesen Mangel zu beheben ist - wie im vorherigen Fall beschrieben - der Einsatz einer zusätzlichen konventionellen Heizung erforderlich.

Die vorliegende Erfindung stellt sich daher die Aufgabe, einen Speicherbehälter zu schaffen, bei dem die Auswirkungen der genannten Nachteile größtenteils nicht zum tragen kommen. Damit kann der Einsatz einer zusätzlichen konventionellen Heizung zwar nicht gänzlich vermieden, jedoch kann die Häufigkeit ihres Einsatzes erheblich reduziert werden.

Diese Aufgabe wird dadurch gelöst, dass zwischen dem Boiler und dem Mantel des Speicherbehälters ein zusätzlicher Bauteil, im folgenden als Turbohülse bezeichnet, angeordnet ist und das Registerrohr zumindest größtenteils zwischen der Innenwand der Turbohülse und der Außenwand des Boilers liegt.

Durch den zusätzliche Einbau der erfindungsgemäßen Turbohülse werden folgende Vorteile erzielt:
- Das durch das Registerrohr strömende Transportmedium erhitzt das Heizungswasser im Speicherbehälter, welches an der Außenwand des Registerrohres vorbeifließt, wobei das erhitzte Heizungswasser durch die Kaminwirkung in der Turbohülse auf hohem Temperaturniveau schnell nach oben strömt, ohne sich mit dem die Turbohülse außen umgebenden Heizungswasser zu vermischen. Es strömt aus der oberen glockenförmigen Erweiterung heraus und führt so zu einer heißen oberen Zone oberhalb der Turbodüse. Eine schichtweise Aufheizung des Speicherinhaltes von oben nach unten ist die Folge.
- Durch die Form der Turbohülse bleibt im oberen Drittel des Speicherbehälters das Heizungswasser auf hohem Temperaturniveau im beruhigten Zustand immer geschützt vor Verwirbelung.
- Sind über die Höhe des Speicherbehälters wenigstens vier Anschlüsse zur Zentralheizung vorhanden, so kann an den mittleren Anschlüssen, welche sich bevorzugt im Nahbereich des zylindrischen verengten Teiles bzw. nahe der unteren glockenförmigen Erweiterung der Turbohülse befinden, Heizungswasser für die Hausheizung entnommen bzw. wieder rückgeführt werden, ohne dass die Temperaturschichtung im restlichen Speicherbehälter zerstört wird. Die heiße Zone im oberen Drittel bleibt auf jeden Fall erhalten.
- Es können drei verschiedene Temperaturniveaus gefahren werden:
   1. Oberes Drittel: hohes Temperaturniveau für Brauchwasser
   2. Mittleres Drittel: Temperaturniveau entsprechend den Heizbedingungen
   3. Unteres Drittel: kaltes Temperaturniveau.

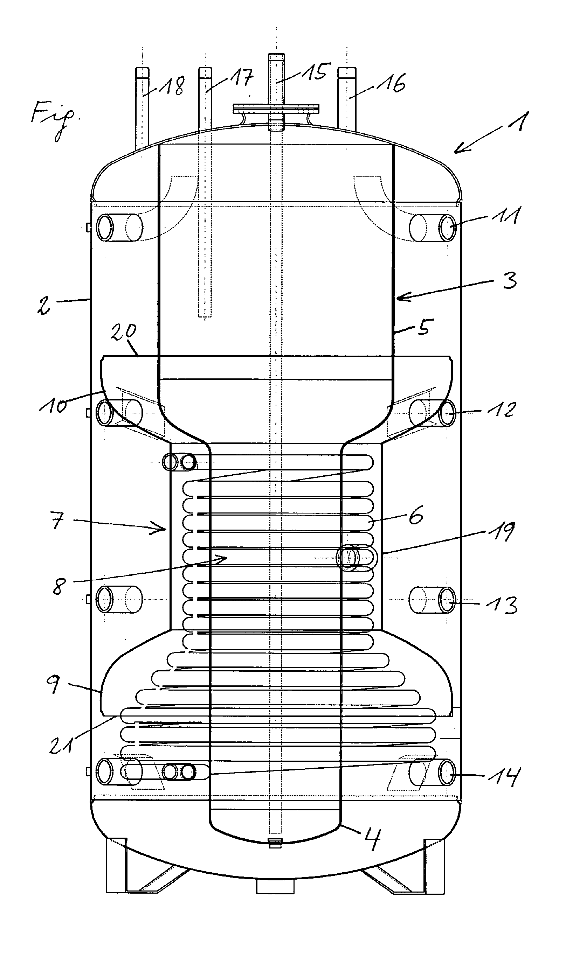

Die Erfindung wird anhand der Figur näher erläutert:

Der Speicherbehälter 1 besitzt einen äußeren Mantel 2, einen innenliegenden Boiler 3 mit einem unteren Bereich 4, dessen Durchmesser kleiner ist als der Durchmesser seines oberen Bereiches 5, ein den unteren Bereich 4 des Boilers 3 umschließendes Registerrohr 6 und eine zwischen dem Registerrohr 6 und dem Mantel 2 des Speicherbehälters 1 liegende Turbohülse 7.

Das Registerrohr 6 ist in einer bevorzugten Ausführungsform dergestalt ausgebildet, dass der kreisförmige Querschnitt, welcher durch die Windungen des Registerrohres beschrieben wird, in der oberen Hälfte 8 des Bereiches 4 des Boilers 3 so gering wie bautechnisch möglich gehalten wird, während sich dieser kreisförmige Querschnitt in Richtung zur unteren glockenförmigen Erweiterung 9 der Turbohülse 7 vergrößert und, in einer besonders bevorzugten Ausführung der Erfindung über den unteren Rand der glockenförmigen Erweiterung 9 hinausragt.

Im Nahbereich des Übergangs vom unteren Bereich 4 zum oberen Bereich 5 des Boilers 3 ist die obere glockenförmige Erweiterung 10 der Turbohülse 7 angeordnet. Der Speicherbehälter besitzt in einer bevorzugten Ausführungsform wenigstens vier Anschlüsse 11, 12, 13 und 14, welche zur Ableitung bzw. Rückleitung des Heizungswasser zur und von der Hausheizung dienen. Die Boilerzulaufleitung 15 endet mit ihrer freien Öffnung knapp oberhalb der tiefsten Stelle des unteren Bereiches 4 des Boilers 3. Die Boilerablaufleitung 16 weist ihre freie Öffnung nahe der höchsten Stelle des oberen Bereiches 5 des Boilers 3 auf. 17 ist ein Temperaturfühler für den oberen Bereich 5 des Boilers 3. 18 ist eine Entlüftung für den Speicherbehälter 1. Die Temperaturfühler für den Speicher sitzen auf den seitlichen Anschlüssen 11, 12, 13 und 14.

Die Turbohülse 7 weist einen engen mittleren Abschnitt 19 auf, der das Registerrohr 6 im Nahbereich der oberen Hälfte 8 des Bereiches 4 des Boilers 3 in möglichst geringem Abstand umfaßt. Die Oberkante 20 der oberen glockenförmigen Erweiterung 10 und die Unterkante 21 der unteren glockenförmigen Erweiterung 9 der Turbohülse 7 sind von der Innenwand des Mantels 2 des Speicherbehälters 1 nur wenige Millimeter beabstandet. In einer bevorzugten Ausführungsform beträgt dieser Abstand etwa 2 mm.

## Patentansprüche

1. Speicherbehälter zur Speicherung der insbesondere über Solarkollektoren gewonnenen Wärmeenergie für Heizungszwecke und Warmwasser, bestehend aus einem allseits geschlossenen zylindrischen Behälter mit Zu- und Ablaufanschlüssen für eine zentrale Hausheizung, einem innerhalb dieses Speicherbehälters angeordneten Boiler für das Warmwasser mit entsprechenden Zu- und Ablaufleitungen und mehreren Temperaturfühlern und einem wendelförmigen Registerrohr, welches von einem Wärmeträgermedium durchflossen wird und dabei die gewonnene Wärmeenergie an das Wasser im Speicherbehälter abgibt, welches die Außenwand des Registerrohres umspült, **dadurch gekennzeichnet, dass** zwischen dem Boiler (3) und dem Mantel (2) des Speicherbehälters (1) eine zylinderförmige Turbohülse (7) angeordnet ist und das Registerrohr (6) zumindest größtenteils zwischen der Innenwand der Turbohülse (7) und der Außenwand des Boilers (3) liegt.

2. Speicherbehälter nach Anspruch 1, **dadurch gekennzeichnet, dass** die Turbohülse (7) im unteren und im oberen Bereich glockenförmig erweitert ist.

3. Speicherbehälter nach Anspruch 1 oder 2, **dadurch gekennzeichnet, dass** die freiliegenden Randbereiche (20, 21) der unteren glockenförmigen Erweiterung (9) und/oder der oberen glockenförmigen Erweiterung (10) bis fast an den Rand der Innenfläche des Mantels (2) des Speicherbehälters (1) reichen, wobei ein definierter Abstand von wenigen Millimetern, bevorzugt von 2 mm vorhanden ist.

4. Speicherbehälter nach Anspruch 1, 2 oder 3, **dadurch gekennzeichnet, dass** der mittlere, zylinderförmige Teil der Turbohülse (7) soweit verengt ist, dass darin zumindest ein Teilbereich (8) der Wendel des Registerrohres (6) und zumindest ein Teilbereich (4) des Boilers (3) Platz finden und der freie Durchflußquerschnitt für das Speicherwasser wesentlich kleiner ist als der freie Durchflußquerschnitt für das Speicherwasser zwischen der Außenfläche des zylinderförmigen Teiles der Turbohülse (7) und der Innenfläche des Mantels (2) des Speicherbehälters (1).

5. Speicherbehälter nach Anspruch 1 bis 4, **dadurch gekennzeichnet, dass** der Boiler (3) aus einem unteren Bereich (4) mit kleinerem Querschnitt und einem oberen Bereich (5) mit größerem Querschnitt besteht.

6. Speicherbehälter nach Anspruch 1 bis 5, **dadurch gekennzeichnet, dass** die obere glockenförmige Erweiterung (10) der Turbohülse (7) im Nahbereich des Überganges vom unteren Bereich (4) zum oberen Bereich (5) des Boilers (3) liegt.

7. Speicherbehälter nach Anspruch 1 bis 6, **dadurch gekennzeichnet, dass** sich der Kreisumfang des wendelförmigen Registerrohres (6) im Bereich der unteren glockenförmigen Erweiterung (9) der Turbohülse (7) kegelförmige erweitert und bevorzugt über die freie Kante (21) der unteren glockenförmigen Erweiterung (9) ragt.

8. Speicherbehälter nach Anspruch 1 bis 7, **dadurch gekennzeichnet, dass** wenigstens ein Ablaufanschluß (11) des Heizungswassers oberhalb der freien Kante (20) der Turbohülse (7) und wenigstens ein Zulaufanschluß (14) des Heizungswassers unterhalb der freien Kante (21) der Turbohülse (7) angeordnet sind.

9. Speicherbehälter nach Anspruch 1 bis 8, **dadurch gekennzeichnet, dass** wenigstens ein Ablaufanschluß (12) und wenigstens ein Zulaufanschluß (13) des Heizungswassers in einem Bereich seitlich der Turbohülse (7) angeordnet sind.
